(19) Europäisches Patentamt
European Patent Office
Office européen des brevets

(11) Publication number: 0 226 934 B1

(12) **EUROPEAN PATENT SPECIFICATION**

(45) Date of publication of patent specification: **21.09.94**

(51) Int. Cl.5: **C08L 83/07**, //(C08L83/04, 83:05,83:07,C08K5:54)

(21) Application number: **86117116.3**

(22) Date of filing: **09.12.86**

(54) **Curable organosiloxane composition.**

(30) Priority: **10.12.85 JP 277703/85**

(43) Date of publication of application:
**01.07.87 Bulletin 87/27**

(45) Publication of the grant of the patent:
**21.09.94 Bulletin 94/38**

(84) Designated Contracting States:
**BE DE ES FR GB IT NL**

(56) References cited:
**US-A- 3 699 073**
**US-A- 4 082 726**
**US-A- 4 087 585**
**US-A- 4 196 273**

(73) Proprietor: **Toray Silicone Co., Ltd.**
**8 Nihonbashi-muromachi 2-chome**
**Chuo-ku Tokyo 103 (JP)**

(72) Inventor: **Shirahata, Akihiko**
**6,1-chome, Nishi**
**Yushudai**
**Ichihara-shi Chiba Prefecture (JP)**

(74) Representative: **Spott, Gottfried, Dr. et al**
**Patentanwälte Spott und Puschmann**
**Sendlinger-Tor-Platz 11**
**D-80336 München (DE)**

EP 0 226 934 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a curable polyorganosiloxane composition. More specifically, the present invention relates to a curable polyorganosiloxane composition which bonds well to substrates in contact with said composition during curing.

Many methods have been proposed for imparting adhesion to organosiloxane compositions that cure by the addition reaction of lower alkenyl radicals with silicon-bonded hydrogen atoms in the presence of a platinum catalyst. Some of these methods involve addition of various types of adhesion promoters to the compositions. The addition of a silane containing both alkenyl radicals and silicon-bonded alkoxy groups or a partial hydrolysis product of the silane is taught in United States Patent No. 4,196,273. which issued to Imai and Tanaka on April 1, 1980, United States Patent No. 4,329,273, which issued to Hardman et al. on May 11, 1982, and in Japanese Patent Publication No. 76/28309. The use as adhesion promoters of silanes containing both silicon-bonded hydrogen atoms and silicon-bonded alkoxy groups and partial hydrolysis products of these silanes is described in Japanese Patent Publication 82/5836. Curable compositions wherein the adhesion promoter is a linear or cyclic polyorganosiloxane wherein each molecule contains substituents selected from at least one member of the group consisting of lower alkenyl, silicon-bonded hydrogen, silicon-bonded alkoxy, alkoxysilylalkyl, epoxy and ester are described in United States Patent No. 3,699,072, which issued to Clark and Hayes on October 17, 1972, United States Patent No. 4,082 726, which issued to Mine et al. on April 4, 1978, Japanese patent publication 80/39258, and Japanese published application (Kokai) Nos. 54/58755 and 54/58756. The use of an isopropenoxysilane or partial hydrolyzate thereof as an adhesion promoter is disclosed in United States Patent No. 3,892,707, which issued to Itoh and Harada on July 1, 1975.

Each of the aforementioned prior art adhesion promoters has disadvantages associated with its use. The presence of both a lower alkenyl radical and an alkoxy group in a single silane interferes with the addition reaction and slows the cure rate. Siloxanes containing epoxy or ester groups are not completely miscible the principal siloxane ingredient, and the composition becomes cloudy following the addition. Trimethoxysilane is an extremely toxic material. The synthesis of lower alkenoxysilanes is both costly and time consuming, and the silanes tend to be scattered during reduced pressure degassing of the polyorganosiloxane composition. Furthermore, all of these additive methods suffer from the problem that a curing temperature of 100 °C or higher is usually needed in order to generate adhesiveness.

United States Patent No. 4,087,585, which issued to Schulz on May 2, 1978 discloses adhesion promoters for curable compositions obtained by blending a vinyl-containing polyorganosiloxane, an organosilicon compound containing silicon bonded hydrogen atoms and a platinum catalyst. The adhesion promoter consists essentially of the combination of an epoxy-containing alkoxysilane with a polyorganosiloxane containing at least one silicon bonded hydroxyl radical and at least one silicon bonded vinyl radical.

Japanese Patent Application No. 168272/85, filed in the name of the same inventor as the present application, teaches using a specified class of organosilicon compounds as the adhesion promoter for organosiloxane compositions curable by a platinum catalyzed hydrosilation reaction. The organosilicon compounds contain diorganovinylsiloxy, triorganosiloxy, SiO4/2 and alkoxy units in specified molar ratios.

Further study by the present inventor with a view to improving the adhesion of compositions curable by a platinum-catalyzed hydrosilation reaction resulted in the finding that superior adhesion can be achieved by combining the organosilicon compounds disclosed in the aforementioned Japanese Patent Application No. 168272/85 with an epoxy-substituted alkoxysilane.

One object of the present invention is to provide a curable polyorganosiloxane composition which bonds even more tightly to diverse substrates, and particularly to various organic resin substrates, due to the addition of a specific adhesion promoter.

This invention provides a curable composition comprising:

(A) a polyorganosiloxane with the average unit formula

$R_aSiO_{(4-a)/2}$

containing an average of at least two radicals selected from the group consisting of vinyl, allyl, propenyl per molecule, where R represents a monovalent hydrocarbon group a haloalkyl group, a hydroxy group or the above-mentioned alkenyl radicals and the value of $\underline{a}$ is from 0.8 to 2.2;

(B) an organohydrogensiloxane containing at least 2 silicon-bonded hydrogen atoms per molecule and no alkenyl groups, where the concentration of (B) is sufficient to provide a molar ratio of silicon bonded hydrogen atoms relative to the total moles of alkenyl groups present in ingredients A and D of from 0.5 to 3.0.

(C) a amount of a platinum-type catalyst equivalent to from 0.1 to 100 ppm of platinum metal, based on the combined quantities of ingredients (A), (B) and (C); and

(D) a mixture or reaction product of (a) a polysiloxane corresponding to the average formula

$$(CH_2{=}CH\underset{R^1_2}{Si}O_{1/2})_b\ (R^2_3SiO_{1/2})_c\ (R^3O_{1/2})_d\ (SiO_{4/2})_e$$

where $R^1$, $R^2$ and $R^3$ represent identical or different monovalent hydrocarbon radicals other than alkenyl radicals and contain from 1 to 3 carbon atoms, b and d are at least 1, c is 0 or greater, the value of(b + c)/d is from 0.2 to 2, the value of (b + c + d)/e is from 0.4 to 4 and e is from 3 to 30 and (b) an alkoxysilane of the formula

$$AR^4\overset{R^5_n}{Si}(OR^6)_{3-n}$$

where A represents a glycidoxy or epoxycyclohexyl group, $R^4$ represents a divalent hydrocarbon radical containing from 1 to 3 carbon atoms, $R^5$ and $R^6$ represent identical or different monovalent hydrocarbon radicals other than alkenyl and contain from 1 to 3 carbon atoms and n is 1 or 0, and where the weight ratio of (a) to (b) is from 0.1 to 10, inclusive and the weight ratio of (D) relative to (A) does not exceed 0.2.

By way of explanation of the present invention, ingredient A is the principal ingredient of the present compositions. This ingredient, an ethylenically unsaturated polyorganosiloxane, undergoes an addition reaction and crosslinks with ingredient B, an organohydrogensiloxane, in the presence of a platinum-containing catalyst, ingredient C. The lower alkenyl groups present in ingredient A are exemplified by vinyl, allyl and propenyl. The lower alkenyl groups may be present at any position in the molecule, but are preferably present at least at the terminal positions of the molecule.

The monovalent hydrocarbon radicals represented by R are exemplified by alkyl such as methyl, ethyl, propyl and butyl; aryl such as phenyl and tolyl; benzyl; haloalkyl groups such as chloropropyl and trifluoropropyl; and the above-mentioned alkenyl radicals. In addition to R, small amounts of hydroxyl groups may be present. Preferably at least 70% of the R radicals are methyl in order to achieve excellent bonding with the substrate. Most preferably at least 90% of the R radicals are methyl in order to obtain an excellent transparency. The average value of a is from 0.8 to 2.2, but is preferably from 1.95 to 2.05 to achieve excellent bonding.

The molecular configuration of ingredient A can be straight chain, branch-containing straight chain, cyclic, network or three-dimensional, however a straight-chain structure, possibly with a very small quantity of branching, is preferred. The molecular weight of this component is not particularly limited, and may range from that of a low-viscosity liquid to that equivalent to a very high-viscosity gum. The viscosity of this ingredient component is preferably 0.05 to 100 Pa.s, measured at 25 °C from a consideration of the workability of the composition in mixing and bonding.

Examples of polyorganosiloxanes suitable as ingredient A include but are not limited to polyvinylsiloxane, vinylsiloxane-methylsiloxane copolymers, dimethylvinylsiloxy terminated polydimethylsiloxanes, dimethylvinylsiloxy-terminated dimethylsiloxane-methylphenylsiloxane copolymers, dimethylvinylsiloxy-terminated dimethylsiloxane-methylvinylsiloxane copolymers, dimethylvinylsiloxy-terminated dimethylsiloxane-diphenylsiloxane-methylvinylsiloxane copolymers, trimethylsiloxy-terminated dimethylsiloxane-methylvinylsiloxane copolymers, trimethylsiloxy-terminated dimethylsiloxane-methylphenylsiloxane-methylvinylsiloxane copolymers, dimethylvinylsiloxy-terminated polymethyl(3,3,3-trifluoropropyl) siloxanes, dimethylvinylsiloxy-terminated dimethylsiloxane-methyl(3,3,3-tri-fluoropropyl)siloxane copolymers and polysiloxanes composed of $CH_2=CH(CH_3)_2SiO_{1/2}$ units, $(CH_3)_3SiO_{1/2}$ units and $SiO_{4/2}$ units.

The combination of a dimethylvinylsiloxy-terminated polydiorganosiloxane with a polysiloxane composed of $CH_2=CH(CH_3)_2SiO_{1/2}$ units, $(CH_3)_3SiO_{1/2}$ units and $SiO_{4/2}$ units can be used as ingredient A when an increased strength is sought for the cured product of the present polyorganosiloxane compositions.

Ingredient B is the crosslinking agent for ingredient A. The silicon-bonded hydrogen atoms of this ingredient participate in an addition reaction with the lower alkenyl radicals ingredient A under the catalytic

activity of ingredient C in order to cure the composition. The organic groups bonded to silicon are typically monovalent hydrocarbon radicals, and preferred examples are as enumerated for R above, with the exception of alkenyl radicals. The molecular configuration of the organohydrogensiloxane is not particularly restricted and it may be straight chain, branch-containing straight chain or cyclic. The molecular weight of this ingredient is likewise not particularly restricted, however the viscosity is preferably from about 0.001 to about 50 Pa.s at 25 °C to obtain an excellent miscibility with ingredient A. The concentration of this ingredient in the present compositions is determined by the condition that the molar ratio of the total quantity of silicon-bonded hydrogen atoms of this ingredient relative to the total quantity of alkenyl groups in ingredients A and D is from 0.5 to 3, inclusive. When this molar ratio is less than 0.5, an excellent curability will not be obtained. When this ratio exceeds 3.0 the resulting composition tends to foam easily.

When the aforementioned vinyl-containing polysiloxane is additionally employed for reinforcement or other purposes, additional organohydrogensiloxane must be present to maintain the required molar ratio of silicon bonded hydrogen to alkenyl radicals in the composition.

Specific examples of the organohydrogensiloxane ingredient include but are not limited to trimethylsiloxy-terminated polymethylhydrogensiloxanes, trimethylsiloxy-terminated dimethylsiloxane-methylhydrogensiloxane copolymers, dimethylhydrogensiloxy-terminated polymethylhydrogensiloxanes, dimethylhydrogensiloxy-terminated dimethylsiloxanemethylhydrogensiloxane copolymers, dimethylsiloxane-methylhydrogensiloxane cyclic copolymers, copolymers composed of $(CH_3)_2HSiO_{1/2}$ units and $SiO_{4/2}$ units and copolymers composed of $(CH_3)_3SiO_{1/2}$ units, $(CH_3)_2HSiO_{1/2}$ units and $SiO_{4/2}$ units.

Ingredient C catalyzes the addition reaction of silicon-bonded hydrogen atoms with alkenyl radicals and its concrete examples include chloroplatinic acid, alcohol and ketone solutions of chloroplatinic acid, aged alcohol and ketone solutions of chloroplatinic acid, chloroplatinic acid-olefin complexes, chloroplatinic acid-alkenylsiloxane complexes, platinum-diketone complexes, platinum black and supported platinum.

The concentration of ingredient C is equivalent to from 0.1 to 100 ppm of platinum metal based on the combined weight quantity of ingredients A, B, C and D. The crosslinking reaction will not proceed adequately at below 0.1 ppm of platinum in the composition. The use of more than 100 ppm of platinum is uneconomical and also significantly reduces the working time of the present curable compositions at room temperature. The platinum concentration is typically from about 1 to about 20 ppm.

The presence of ingredient D distinguishes the present compositions from prior art materials. This ingredient is responsible for the excellent bonding to substrates with which the present compositions are in contact with during curing.

Part (a) of ingredient D is a polysiloxane with a three-dimensional structure in which the basic structural unit is the $SiO_{4/2}$ unit. This unit is bonded through its oxygen atoms to the $CH_2=CH(R^1)_2Si$, $R^2{}_3Si$ and $R^3$ groups. This ingredient contains fewer than 30 $SiO_{4/2}$ units because above this limit the molecular weight is too large for the ingredient to impart the required adhesion to the composition. The number of $SiO_{4/2}$ units is preferably about 20 from the standpoint of the miscibility of this ingredient with ingredient A, but must be at least 3 to prevent volatilization of part (a) during degassing of the composition.

The values represented by $\underline{b}$ and $\underline{d}$ in the formula for part (a) are both at least 1 because an excellent adhesion cannot be generated when these values are less than 1. The value of $\underline{c}$ can be 0 or greater, the value of $(\underline{b} + \underline{c})/\underline{d}$ is from 0.2 to 2, and the value represented by $(\underline{b} + \underline{c} + \underline{d})/\underline{e}$ must be from 0.4 to 4. The reason for these limits is that excellent adhesion cannot be imparted when these values fall outside the specified ranges. It has been found that a composition in which $(\underline{b} + \underline{c} + \underline{d})/\underline{e}$ exceeds 4 essentially cannot be produced. $R^1$, $R^2$ and $R^3$ are individually identical or different monovalent hydrocarbon radicals containing from 1 to 3 carbon atoms, with the proviso that these radicals do not contain ethylenic unsaturation. R1 and $R^2$ are preferably methyl and $R^3$ is preferably methyl or ethyl.

Part (b) of ingredient D is an alkoxysilane containing at least one epoxide group. Specific examples of this ingredient include but are not limited to gamma-glycidoxypropyltrimethoxysilane, gamma-glycidoxypropylmethyldimethoxysilane, 3,4-epoxycyclohexylethyltrimethoxysilane and 3,4-epoxycyclohexylethylmethyldimethoxysilane.

Part (a) of ingredient D can be synthesized by methods known in the art. An example of such a method is the cohydrolysis of 1 or more of dimethylvinylchlorosilane, dimethylvinylacetoxysilane, dimethylvinylethoxysilane, divinyltetramethyldisiloxane, trimethylchlorosilane, trimethylacetoxysilane and hexamethyldisiloxane with methyl orthosilicate or ethyl orthosilicate in the presence of a strictly regulated quantity of water. It is recommended that an acid catalyst such as hydrochloric acid be employed in this cohydrolysis: Each silicon compound used in this cohydrolysis can be a mixture of 2 or more species.

A compound corresponding to part (a) produced as described hereinbefore may contain residual silanol groups and, after mixing with part (b), an alcohol-releasing reaction may be conducted in the presence of an alkali catalyst such as sodium hydroxide, potassium hydroxide or potassium silanolate. During the preparation of ingredient D, part (a) may be partially reacted with part (b), or a simple mixture of these two parts may be used.

When the alkali-catalyzed alcohol releasing reaction is performed, the mixture present following the reaction is preferably neutralized with, for example, carbon dioxide, a chlorosilane or acetic acid, before use. The weight ratio of part (a) to part (b) in ingredient D must be within the range of 0.1 to 10, and preferably within the range of from 0.5 to 2 in order to obtain good adhesion between the cured composition of this invention and the substrate.

The weight of ingredient D must not exceed 1/5 of the weight of ingredient A because the addition of larger quantities degrades the properties of the composition itself. The optimal quantity of ingredient D for obtaining excellent adhesion will depend on the structures of the other components, but it is approximately from 1 to 8 parts by weight of ingredient D per 100 parts by weight of ingredient A.

The curable polyorganosiloxane compositions of the present invention can be produced by simply mixing ingredients A, B, C, and D using any mixing apparatus suitable for mixing a fluid or gum. Examples of suitable mixing devices include planetary mixers, screw mixers, static mixers and kneader mixers.

It is recommended that a small or very small amount of an additive, such as acetylene compounds, hydrazines, triazoles, phosphines and mercaptans, be added to the curable polyorganosiloxane composition of the present invention in order to inhibit the curing reaction at room temperature. In addition, fillers such as fine silica powder and carbon black, thermal stabilisers, colorants and flame retardants may optionally be added unless they adversely affect achieving the objectives of the present invention, specifically a curable composition exhibiting excellent adhesion to a variety of substrates.

The following examples describe preferred embodiments of the present compositions and should not be interpreted as limiting the scope of the accompanying claims. All parts and percentages in the examples are by weight unless otherwise specified, and viscosity and other properties are measured at 25 °C.

Example 1

A series of polyorganosiloxane compositions were prepared from a dimethylvinylsiloxy-terminated polydimethylsiloxane with a viscosity of 2 Pa.s (polymer A1); a trimethylsiloxy-terminated copolymer consisting essentially of dimethylsiloxane and methylhydrogensiloxane units in a molar ratio of 3:5, respectively, and exhibiting a viscosity of 0.01 Pa.s (polymer XI); a 1% by weight solution of chloroplatinic acid in 2- ethylhexanol (catalyst 1); a polysiloxane (polymer M1) with the formula

$[CH_2=CH(CH_3)_2SiO_{1/2}]_4\ [(CH_3)_3SiO_{1/2}]_4\ [CH_3O_{1/2}]_{12}\ [SiO_{4/2}]_{12}$;

a polysiloxane (polymer M2) with the formula

$[CH_2=CH(CH_3)_2SiO_{1/2}]_5\ [(CH_3)_3SiO_{1/2}]_4\ [CH_3O_{1/2}]_9\ [SiO_{4/2}]_{11}$;

a polysiloxane (polymer M3) with the formula

$[CH_2=CH(CH_3)_2SiO_{1/2}]_4\ [(CH_3)_3SiO_{1/2}]_6\ [CH_3O_{1/2}]_6\ [SiO_{4/2}]_{10}$;

gamma-glycidoxypropyltrimethoxysilane (silane 1); the reaction product (polymer M4) obtained by heating a 1:1 weight ratio mixture of polymer M1 and silane 1 at 100 °C for 1 hour in the presence of 500 ppm KOH, removing the produced methanol and neutralizing the reaction mixture with $Me_3SiCl$; the reaction mixture (polymer M5) obtained by heating a 1:1 weight ratio mixture of polymer M2 and silane 1 at 100 °C for one hour in the presence of 500 ppm KOH; and 3-methylbutyne-3-ol (additive I1). Each composition was cured in contact with glass at 150 °C. The light transmission and adhesion to glass of the cured products were measured and the results are reported in Table 1. The adhesion values reported in Table 1 are the % cohesive failure, i.e. the percent of substrate surface to which the cured elastomer had adhered. The curing time is the time required for a complete curing of the composition. Light transmission was measured at a wavelength of 500 nm on a 10 mm thickness of the cured product.

**TABLE 1**

| Ingredients | Comparative example 1 | Present invention 2 | 3 | 4 | 5 | 6 | 7 | 8 |
|---|---|---|---|---|---|---|---|---|
| | **Experiment number** | | | | | | | |
| polymer A1 (parts) | 100 | 100 | 100 | 100 | 100 | 100 | 100 | 100 |
| polymer X1 (parts) | 1.8 | 1.8 | 1.8 | 1.8 | 1.8 | 1.8 | 1.8 | 1.8 |
| catalyst 1 (parts) | 0.1 | 0.1 | 0.1 | 0.1 | 0.1 | 0.1 | 0.1 | 0.1 |
| additive I1 (parts) | 0.01 | 0.01 | 0.01 | 0.01 | 0.01 | 0.01 | 0.01 | 0.01 |
| polymer M1 (parts) | 1.5 | 1.5 | 1.5 | | | | | |
| polymer M2 (parts) | | | | 1.5 | | | | |
| polymer M3 (parts) | | | | | 2.0 | 1.0 | | |
| polymer M4 (parts) | | | | | | | 3.0 | |
| polymer M5 (parts) | | | | | | | | 3.0 |
| silane 1 (parts) | | 1.5 | 1.0 | 1.5 | 1.0 | 2.0 | | |
| light transmission (%) | 98 | 98 | 98 | 98 | 97 | 98 | 98 | 98 |
| curing time (minutes @150°C) | 3 | 3 | 3 | 3 | 3 | 3 | 3 | 3 |
| Cohesive Failure (%) | 60 | 100 | 100 | 100 | 100 | 100 | 100 | 100 |

Example 2

A composition was prepared from 100 parts dimethylvinylsiloxy-terminated polydimethylsiloxane with a viscosity of 10 Pa.s; 10 parts polyorganosiloxane resin with a vinyl group content of 1%, a softening point of 120°C and consisting essentially of dimethylvinylsiloxy, trimethylsiloxy and $SiO_{4/2}$ units; 30 parts of trimethylsilyl-hydrophobicized fumed silica; 0.4 parts tetramethyltetravinylcyclotetrasiloxane; 10 parts of a trimethylsiloxy-terminated copolymer consisting essentially of dimethylsiloxane and methylhydrogensiloxane units in a molar ratio of 3:1, respectively, and exhibiting a viscosity of 0.01 Pa.s; and a divinyltetramethyldisiloxane-chloroplatinic acid complex in an amount equivalent to 10 ppm platinum, based on the weight of the total composition. These ingredients are combined and blended with one of the adhesion promoters from Example 1, in the quantity specified in Table 2, followed by degassing at room temperature under reduced pressure for 30 minutes. The compositions were then applied to various substrates and cured at 120°C for 30 minutes. The percent cohesive failure was measured for each substrate and the results reported in Table 2. In the table, the concentrations of the adhesion promoters are expressed in parts by weight, based on 100 parts of the polydimethylsiloxane.

Table 2

| Example No. | 9* | 10 | 11 | 12 |
|---|---|---|---|---|
| Adhesion Promoters | A | B | C | D |
| **Substrates** | | | | |
| iron | 50 | 95 | 50 | 50 |
| stainless steel | 50 | 95 | 50 | 50 |
| copper | 100 | 100 | 100 | 100 |
| aluminum | 100 | 100 | 100 | 100 |
| phenol resin | 100 | 100 | 100 | 100 |
| polyethylene terephthalate resin | 100 | 100 | 100 | 100 |
| epoxy resin | 0 | 100 | 100 | 100 |
| polybutylene terephthalate resin | 100 | 100 | 100 | 100 |
| polymethyl methacrylate resin | 50 | 100 | 100 | 100 |
| polyphenylene sulfide resin | 0 | 100 | 100 | 100 |

Adhesion Promoters: A - 3 parts polymer M1 (Ex.1)
B - 3 parts of a 1:1 weight ratio mixture of polymer M1 and silane 1
C - 3 parts polymer M4
D - 3 parts polymer M5

* - Comparative Example

The foregoing data demonstrate that the addition of the present adhesion promoters to an addition-curable polyorganosiloxane composition imparts excellent adhesion without adversely affecting other desirable properties such as rate of the curing reaction, transparency. In addition there is no reduction in adhesion following degassing of the composition. The compositions therefore exhibit excellent adhesion to substrates, in particular, organic resins, which are in contact with the composition during curing.

Accordingly, the curable polyorganosiloxane compositions of this invention are suitable as adhesives or coating materials for diverse substrates, for example, glass, ceramics, metals, resins, papers and textiles. The compositions are useful in various industries such as the electric/electronic industry, the measurement instrument industry, the automobile industry, the machine industry, in civil engineering and construction and in the container, packaging and medical appliance industries.

In addition, the composition is highly transparent and so is optimal as an adhesive in optical applications.

## Claims

**1.** A curable composition comprising:

(A) a polyorganosiloxane with the average unit formula

$R_aSiO_{(4-a)/2}$

containing an average of at least two radicals per molecule, selected from the group consisting of vinyl, allyl, propenyl where R represents a monovalent hydrocarbon group, a haloalkyl group, hydroxy group or the above-mentioned alkenyl radicals and the value of a is from 0-8 to 2.2;

(B) an organohydrogensiloxane containing at least 2 silicon-bonded hydrogen atoms per molecule and no alkenyl groups, where the concentration of (B) is sufficient to provide a molar ratio of silicon bonded hydrogen atoms relative to the total moles of alkenyl groups present in ingredients A and D of from 0.5 to 3.0.

(C) a amount of a platinum-type catalyst equivalent to from 0.1 to 100 ppm of platinum metal, based on the combined quantities of ingredients (A), (B) and (C); and

(D) an adhesion promotor characterized in that the adhesion promotor (D) is a mixture or reaction product of (a) a polysiloxane corresponding to the average formula

$$(CH_2{=}CH\underset{\substack{|\\R^1_2}}{Si}O_{1/2})_b\ (R^2_3SiO_{1/2})_c\ (R^3O_{1/2})_d\ (SiO_{4/2})_e$$

where $R^1$, $R^2$ and $R^3$ represent identical or different monovalent hydrocarbon radicals other than alkenyl radicals and contain from 1 to 3 carbon atoms, $b$ and $d$ are at least 1, $c$ is 0 or greater, the value of $(b + c)/d$ is from 0.2 to 2, the value of $(b + c + d)/e$ is from 0.4 to 4 and $e$ is from 3 to 30 and (b) an alkoxysilane of the formula

$$AR^4\overset{\substack{R^5_n\\|}}{Si}(OR^6)_{3-n}$$

where A represents a glycidoxy or epoxycyclohexyl group, $R^4$ represents a divalent hydrocarbon radical containing from 1 to 3 carbon atoms, $R^5$ and $R^6$ represent identical or different monovalent hydrocarbon radicals other than alkenyl and contain from 1 to 3 carbon atoms, and $n$ is 1 or 0, and where the weight ratio of (a) to (b) is from 0.1 to 10, inclusive and the weight ratio of (D) relative to (A) does not exceed 0.2.

**2.** A composition according to claim 1 where R is alkyl, aryl, haloalkyl or alkenyl, the hydrocarbon radicals present in (B) are alkyl, aryl or haloalkyl, the molar ratio of silicon bonded hydrogen atoms to alkenyl radicals in said composition is from 0.5 to 3.0, inclusive, $R^1$ and $R^2$ are methyl and $R^3$ is methyl or ethyl.

**3.** A composition according to claim 2 where R is methyl or 3,3,3- trifluoropropyl, the alkenyl radicals are vinyl, and part (b) of ingredient D is selected from the group consisting of gamma-glycidoxypropyltrimethoxysilane, gamma- glycidoxypropylmethyldimethoxysilane, 3,4-epoxycyclohexylethyltrimethoxysilane, and 3,4-epoxycyclohexylethylmethyldimethoxysilane.

**4.** A composition according to claim 3 where at least 70 percent of the R radicals are methyl, $e$ is no more than 20, the composition contains from 1 to 8 parts by weight of (D) per 100 parts of (A), and the weight ratio of part (a) of ingredient (D) to part (b) of ingredient (D) is from 0.5 to 2.

**5.** A composition according to claim 4 where at least 90 percent of the radicals represented by R are methyl, the value of $a$ is from 1.95 to 2.05, the viscosity of (A) is from 0.05 to 100 Pa.s at 25 °C the viscosity of (B) is from 0.001 to 50 Pa.s at 25 °C the concentration of said catalyst is equivalent to from 1 to 20 ppm of platinum, based on the combined weight of A, B, C and D, the composition contains a polysiloxane composed of of $CH_2{=}CH(CH_3)_2SiO1_{/2}$, $(CH_3)_3SiO_{1/2}$ and $SiO_{4/2}$ units, and a platinum catalyst inhibitor.

**6.** A composition according to claim 5 where the platinum catalyst is chloroplatinic acid, $b$ is 4 or 5, $c$ is 4, 5, or 6, the value of $d$ is from 6 to 12, inclusive, the value of $e$ is 10, 11 or 12, part (b) of ingredient (D) is gamma- glycidoxypropyltrimethoxysilane and the weight ratio of part (a) to part (b) of ingredient (D) is 1:1.

7. A composition according to claim 6 where ingredient (D) is a reaction product of part (a) and part (b) of ingredient (D).

8. A composition according to claim 7 where said composition contains fume silica as a filler.

## Patentansprüche

1. Härtbare Zusammensetzung umfassend
(A) ein Polyorganosiloxan mit der durchschnittlichen Einheitsformel
$R_aSiO_{(4-a)/2}$,
das durchschnittlich mindestens zwei Reste ausgewählt aus der Gruppe bestehend aus Vinyl-, Allyl-, Propenylresten pro Molekül enthält, wobei R eine monovalente Kohlenwasserstoffgruppe, eine Halogenalkylgruppe, eine Hydroxygruppe oder die oben erwähnten Alkenylreste bedeutet und der Wert von a 0,8 bis 2,2 ist;
(B) ein Organohydrogensiloxan, das mindestens zwei siliziumgebundene Wasserstoffatome pro Molekül und keine Alkenylgruppen enthält, wobei die Konzentration von (B) ausreichend ist, um ein molares Verhältnis von siliziumgebundenen Wasserstoffatomen zu der Gesamtanzahl Mol Alkenylgruppen, die in den Inhaltsstoffen A und D vorhanden ist, von 0,5 bis 3,0 bereitzustellen
(C) eine Menge eines platinhaltigen Katalysators, die 0,1 bis 100 ppm Platinmetall äquivalent ist, bezogen auf die vereinigten Mengen der Inhaltsstoffe (A), (B) und (C) und
(D) einen Haftvermittler, dadurch gekennzeichnet, daß der Haftvermittler (D) eine Mischung oder ein Reaktionsprodukt von (a) einem Polysiloxan der durchschnittlichen Formel

$$(CH_2{=}CH\underset{\displaystyle R^1_2}{\overset{|}{Si}}O_{1/2})_b(R^2{}_3SiO_{1/2})_c(R^3O_{1/2})_d(SiO_{4/2})_e$$

worin $R^1$, $R^2$ und $R^3$ identische oder verschiedene andere monovalente Kohlenwasserstoffreste als Alkenylreste bedeuten, die 1 bis 3 Kohlenstoffatome enthalten, b und d mindestens 1 sind, c 0 oder größer ist, der Wert von (b + c)/d 0,2 bis 2 ist, der Wert von (b + c + d)/e 0,4 bis 4 ist und e 3 bis 30 ist und (b) einem Alkoxysilan der Formel

$$AR^4\overset{\displaystyle R^5_n}{\overset{|}{Si}}(OR^6)_{3-n}$$

worin A eine Glycidoxy- oder Epoxycyclohexylgruppe bedeutet, $R^4$ einen divalenten Kohlenwasserstoffrest mit 1 bis 3 Kohlenstoffatomen bedeutet, $R^5$ und $R^6$ identische oder verschiedene andere monovalente Kohlenwasserstoffreste als Alkenylgruppen bedeuten, die 1 bis 3 Kohlenstoffatome enthalten und n 1 oder 0 ist und worin das Gewichtsverhältnis von (a) zu (b) 0,1 bis einschließlich 10 ist und das Gewichtsverhältnis von (D) zu (A) 0,2 nicht übersteigt.

2. Zusammensetzung nach Anspruch 1, worin R ein Alkyl-, Aryl-, Halogenalkyl- oder Alkenylrest ist, die in (B) vorhandenen Wasserstoffreste Alkyl-, Aryl- oder Halogenalkylreste sind, das molare verhältnis von siliziumgebundenen Wasserstoffatomen zu Alkenylresten in der Zusammensetzung 0,5 bis einschließlich 3,0 ist, $R^1$ und $R^2$ Methylreste sind und $R^3$ ein Methyl- oder Ethylrest ist.

3. Zusammensetzung nach Anspruch 2, worin R ein Methyl- oder 3,3,3-Trifluorpropylrest ist, die Alkenylreste Vinylreste sind und Teil (b) von Inhaltsstoff (D) ausgewählt ist aus der Gruppe bestehend aus gamma-Glycidoxypropyltrimethoxysilan, gamma-Glycidoxypropylmethyldimethoxysilan, 3,4-Epoxycyclohexylethyltrimethoxysilan und 3,4-Epoxycyclohexylethylmethyldimethorysilan.

4. Zusammensetzung nach Anspruch 3, worin mindestens 70% der Reste R Methylreste sind, e nicht größer als 20 ist, die Zusammensetzung 1 bis 8 Gewichtsteile (D) pro 100 Teile (A) enthält und das

Gewichtsverhältnis von Teil (a) von Inhaltsstoff (D) zu Teil (b) von Inhaltsstoff (D) 0,5 bis 2 ist.

5. Zusammensetzung nach Anspruch 4, worin mindestens 90% der durch R dargestellten Reste Methylreste sind, der Wert von a 1,95 bis 2,05 ist, die Viskosität von (A) 0,05 bis 100 Pa·s bei 25 °C ist, die Viskosität von (B) 0,001 bis 50 Pa·s bei 25 °C ist, die Konzentration des Katalysators gleich ist 1 bis 20 ppm Platin, bezogen auf das vereinigte Gewicht von A, B, C und D, die Zusammensetzung ein Polysiloxan, das aus $CH_2=CH(CH_3)_2SiO_{1/2}$-, $(CH_3)_3-SiO_{1/2}$- und $SiO_{4/2}$ - Einheiten zusammengesetzt ist und einen Inhibitor für den Platinkatalysator enthält.

6. Zusammensetzung nach Anspruch 5, worin der Platinkatalysator Chlorplatinsäure ist, b 4 oder 5 ist, c 4, 5 oder 6 ist, der Wert von d 6 bis einschließlich 12 ist, der Wert von e 10, 11 oder 12 ist, Teil (b) von Inhaltsstoff (D) gamma-Glycidoxypropyltrimethoxysilan ist und das Gewichtsverhältnis von Teil (a) zu Teil (b) von Inhaltsstoff (D) 1:1 ist.

7. Zusammensetzung nach Anspruch 6, worin Inhaltsstoff (D) ein Reaktionsprodukt von Teil (a) und Teil (b) von Inhaltsstoff (D) ist.

8. Zusammensetzung nach Anspruch 7, worin die Zusammensetzung gebranntes Siliziumdioxid als Füllstoff enthält.

## Revendications

1. Composition durcissable comprenant :
(A) un polyorganosiloxane ayant la formule unitaire moyenne :
$R_aSiO_{(4-a)/2}$
contenant en moyenne au moins deux radicaux par molécule, choisis dans l'ensemble constitué par les radicaux vinyle allyle et propényle, où R représente un groupe hydrocarboné monovalent, un groupe halogénoalkyle, un groupe hydroxy ou les radicaux alkényles indiqués ci-dessus, et la valeur de a est de 0,8 à 2,2 ;
(B) un organohydrogénosiloxane contenant au moins 2 atomes d'hydrogène liés au silicium par molécule, et pas de groupe alkényle, où la concentration de (B) est suffisante pour fournir un rapport molaire des atomes d'hydrogène liés au silicium au nombre total de moles de groupes alkényles présents dans les ingrédients A et D de 0,5 à 3,0 ;
(C) un catalyseur du type platine en une quantité équivalente à 0,1 à 100 ppm de platine métallique, par rapport aux quantités combinées des ingrédients (A), (B) et (C); et
(D) un promoteur d'adhérence,
caractérisée en ce que ledit promoteur d'adhérence (D) est un mélange ou un produit de réaction de (a) un polysiloxane correspondant à la formule moyenne :

$$(CH_2{=}CH\underset{\displaystyle R^1_2}{\underset{|}{Si}}O_{1/2})_b(R^2{}_3SiO_{1/2})_c(R^3O_{1/2})_d(SiO_{4/2})_e$$

où $R^1$, $R^2$ et $R^3$ représentent des radicaux hydrocarbonés monovalents identiques ou différents les uns des autres, autres que des radicaux alkényles, et contiennent de 1 à 3 atomes de carbone, b et d valent au moins 1, c vaut 0 ou plus, la valeur de (b + c)/d est de 0,2 à 2, la valeur de (b + c + d)/e est de 0,4 à 4, et e vaut de 3 à 30, et (b) un alcoxysilane de formule :

$$AR^4\overset{\displaystyle R^5{}_n}{\overset{|}{Si}}(OR^6)_{3-n}$$

où A représente un groupe glycidoxy ou époxycyclohexyle, $R^4$ représente un radical hydrocarboné bivalent contenant de 1 à 3 atomes de carbone, $R^5$ et $R^6$ représentent des radicaux hydrocarbonés monovalents identiques ou différents, autres que des radicaux alkényles, et contiennent de 1 à 3 atomes de carbone, et n vaut 1 ou 0, où le rapport pondéral de (a) à (b) vaut de 0,1 à 10 inclus, et

le rapport pondéral de (D) à (A) ne dépasse pas 0,2.

**2.** Composition selon la revendication 1, où R est un groupe alkyle, aryle, halogénoalkyle ou alkényle, les radicaux hydrocarbonés présents dans (B) sont des groupes alkyles, aryles ou halogénoalkyles, le rapport molaire des atomes d'hydrogène liés au silicium aux radicaux alkényles dans ladite composition vaut de 0,5 à 3,0 inclus, $R^1$ et $R^2$ sont des groupe méthyles, et $R^3$ est un groupe méthyle ou éthyle.

**3.** Composition selon la revendication 2, où R est un groupe méthyle ou 3,3,3-trifluoropropyle, les radicaux alkényles sont des radicaux vinyle, et la partie (b) de l'ingrédient D est choisie dans l'ensemble constitue par les gamma-glycidoxypropyltriméthoxysilane, gamma-glycidoxypropylméthyldiméthoxysilane, 3,4-époxycyclohexyléthyltriméthoxysilane et 3,4-époxycyclohexyléthylméthyldiméthoxysilane.

**4.** Composition selon la revendication 3, où au moins 70 % des radicaux R sont des radicaux méthyle, e ne vaut pas plus de 20, la composition contient 1 à 8 parties en poids de (D) pour 100 parties de (A), et le rapport pondéral de la partie (a) de l'ingrédient (D) à la partie (b) de l'ingrédient (D) vaut de 0,5 à 2.

**5.** Composition selon la revendication 4, où au moins 90 % des radicaux représentés par R sont des radicaux méthyle, la valeur de a est de 1,95 à 2,05, la viscosité de (A) est de 0,05 à 100 Pa.s à 25 °C, la viscosité de (B) est de 0,001 à 50 Pa.s à 25 °C, la concentration dudit catalyseur équivaut à 1 à 20 ppm de platine, sur la base du poids combiné de A, B, C et D, la composition contient un polysiloxane composé d'unités $CH_2=CH(CH_3)_2SiO_{1/2}$, d'unités $(CH_3)_3SiO_{1/2}$ et d'unités $SiO_{4/2}$, et un inhibiteur du catalyseur du type platine.

**6.** Composition selon la revendication 5, où le catalyseur du type platine est l'acide chloroplatinique, b vaut 4 ou 5, c vaut 4, 5 ou 6, d vaut de 6 à 12 inclus, e vaut 10, 11 ou 12, la partie (b) de l'ingrédient (D) est un gammaglycidoxypropyltriméthoxysilane, et le rapport pondéral de la partie (a) à la partie (b) de l'ingrédient (D) vaut 1:1.

**7.** Composition selon la revendication 6, où l'ingrédient (D) est un produit de réaction de la partie (a) et de la partie( b) de l'ingrédient (D).

**8.** Composition selon la revendication 7, où ladite composition contient de la silice de fumée comme charge.